# NEUE EUROPÄISCHE PATENTSCHRIFT

(11) **EP 2 472 302 B2**
(45) Veröffentlichungstag und Bekanntmachung des Hinweises auf die Entscheidung über den Einspruch: **13.01.2021**
(45) Hinweis auf die Patenterteilung: 29.11.2017
(21) Anmeldenummer: 11196002.7
(22) Anmeldetag: 29.12.2011
(51) Int. Cl.: G02B 21/36, G02B 21/00

(54) **Verfahren zur Korrektur von Bildverzeichnungen bei einem konfokalen Scan-Mikroskop**
Method for adjusting image recordings in a confocal scanning microscope
Procédé de correction de distorsions d'image dans un microscope à balayage à foyer commun

(30) Priorität: 29.12.2010 DE 102010061612
(43) Veröffentlichungstag der Anmeldung: 04.07.2012
(73) Patentinhaber: Leica Microsystems CMS GmbH, 35578 Wetzlar (DE)
(72) Erfinder: Birk, Holger, 74909 Meckesheim (DE)

(56) Entgegenhaltungen:
- EP-A2- 1 107 037
- WO-A1-2008/032055
- DE-A1- 10 115 578
- DE-A1- 10 126 286
- DE-A1- 19 654 210
- DE-A1-102005 047 200
- JP-A- 2005 156 756
- US-A- 5 825 670
- US-A1- 2002 008 904
- US-A1- 2003 055 588
- Montagu: "Laser Beam Scanning", 1985 pages 194,205,208,225-235,
- Pawley, Stelzer: "Handbook of Biological Confocal Microscopy", 2006 pages 38,62,63,207-210,634,

## Beschreibung

Die Erfindung betrifft ein Verfahren zum Ermitteln von Scankoordinatenwerten oder korrigierten Scankoordinatenwerten zum Betreiben einer Scaneinheit eines konfokalen Scan-Mikroskops.

Ein konfokales Scan-Mikroskop kann beispielsweise dazu verwendet werden, fluoreszierende Stoffe in Proben, insbesondere Gewebeproben, anzuregen und das dadurch entstehende Fluoreszenzlicht zu detektieren. Dabei wird grundsätzlich ein Beleuchtungslichtstrahl über eine Scaneinheit auf eine Probe gelenkt, wobei die Scaneinheit mit einem Ansteuersignal betrieben wird, das Scanlcoordinatenwerte umfasst. Die Scankoordinatenwerte sind repräsentativ für Stellungen von Stellelementen der Scaneinheit. Das von der Probe ausgestrahlte Fluoreszenzlicht wird über die Scaneinheit und einen Strahlteiler, der das Fluoreszenzlicht von dem Beleuchtungslicht trennt, auf ein Detektionspinhole gelenkt, der einen kleinen Teil des Detektionslichts hin zu einem Detektor durchlässt. Das mit Hilfe des Detektors erfasste Detektionslicht wird in Abhängigkeit der Scankoordinatenwerte detektiert. In anderen Worten wird zusätzlich zu dem von der Scaneinheit detektierten Signal auch registriert, welche Stellung die Stellelemente der Scaneinheit beim Detektierten des Detektionslichts haben, wobei die Stellungen durch die Scankoordinatenwerte repräsentiert sind.

Das Detektionslicht kann in Abhängigkeit von den Scankoordinatenwerten detektiert werden, mit denen die Scaneinheit angesteuert wird, wobei, falls die Scaneinheit, insbesondere deren Stellungen, geregelt wird, die vorgegebenen Scankoordinatenwerte auch als Soll-Scankoordinatenwerte bezeichnet werden können. Alternativ dazu können tatsächliche Stellungen der Scaneinheit mit Hilfe von Sensoren erfasst werden und diese erfassten Scankoordinatenwerte können dann dem bei den erfassten Stellungen detektierten Detektionslicht zugeordnet werden, wobei, falls wiederum die Stellungen der Scaneinheit geregelt werden, diese erfassten Scankoordinatenwerte auch als Ist-Scankoordinatenwerte bezeichnet werden können.

Während des optischen Abtastens der Probe oder nachfolgend, kann das Bild der Probe anhand von vielen aufgenommenen Bildpunkten zusammengesetzt werden, wobei die Position jedes Bildpunktes durch ein paar von Bildkoordinatenwerten bestimmt ist und den Bildkoordinatenwerten entsprechende Scankoordinatenwerte zugeordnet sind. Es ist bekannt, diese Zuordnung der Bildkoordinatenwerte zu den Scankoordinatenwerten durch Näherungen zu bestimmen. Dadurch können jedoch Verzeichnungen und/oder Verzerrungen, insbesondere an den Rändern des Bildes der Probe entstehen.

Die Verzeichnungen an den Bildern treten nicht nur aufgrund der näherungsweise berechneten Scankoordinatenwerte, sondern auch aufgrund von optischen Effekten der optischen Elemente des konfokalen Scan-Mikroskops auf, die bei bekannten Scan-Mikroskopen oder Verfahren zum Betreiben der Scan-Mikroskope nicht berücksichtigt werden.

Die Verzeichnungen sind insbesondere dann problematisch, wenn ein Gesamtbild einer Probe aus mehreren aneinandergesetzten Einzelbildern zusammengesetzt werden soll, da dann die Bilder an ihren Rändern nicht zueinander passen. Ferner kann dies problematisch sein, wenn das derart konfokal aufgenommene Bild der Probe mit einer Weitfeldaufnahme ("wide field") überlagert werden soll, da bei der Weitfeldaufnahme derartige Verzeichnungen an den Bildrändern nicht auftreten und so die beiden Bilder der Probe insbesondere an den Rändern der Bilder nicht zusammenpassen.

In der EP 1 107 037 A2 ist ein scanmikroskopisches Verfahren beschrieben, bei dem eine Probe in einer beweglichen Objektaufnahmeeinrichtung angeordnet ist. Diese Objektaufnahmeeinrichtung wird von einer Dreheinrichtung um eine Achse gedreht. Da sich die Objektaufnahmeeinrichtung nicht geradlinig durch den Fokus bewegt, wird für die Bewegung der Objektaufnahmeeinrichtung auf ein "krummliniges" Koordinatensystem Bezug genommen.

Es ist Aufgabe der vorliegenden Erfindung, ein Verfahren zum Ermitteln von Scankoordinatenwerten zum Betreiben einer Scaneinheit eines konfokalen Scan-Mikroskops zu schaffen, welches das Erstellen eines präzisen Bildes der Probe, insbesondere an den Bildrändern, mit einfachen Mitteln ermöglichen.

Die Aufgabe wird gelöst durch die Merkmale des unabhängigen Anspruchs 1. Vorteilhafte Ausgestaltungen sind in den Unteransprüchen angegeben.

Die Erfindung zeichnet sich gemäß einem ersten Aspekt dadurch aus, dass sphärische Scankoordinatenwerte, abhängig von kartesischen Bildkoordinatenwerten von Bildpunkten eines zu erstellenden Bildes einer Probe mit Hilfe einer Koordinatentransformation der kartesischen Bildkoordinatenwerte, in einem Kugelkoordinatensystem ermittelt werden. Abhängig von den sphärischen Scankoordinatenwerten wird die Scaneinheit betrieben.

Die Transformation der kartesischen Bildkoordinatenwerte in das Kugelkoordinatensystem trägt dazu bei, dass eine präzise Zuordnung der Bildpunkte des Bildes, die durch Detektieren von Detektionslicht ermittelt werden, zu Stellungen der Scaneinheit des konfokalen Scan-Mikroskops erfolgt, wobei die Stellungen der Scaneinheit durch die sphärischen Scankoordinatenwerte vorgegeben sind. Dies führt dazu, dass das Bild der Probe präzise der Probe entspricht, insbesondere an den Bildrändern des Bildes.

Die sphärischen Scankoordinatenwerte liegen in einem Format vor oder sind so formatiert, dass abhängig von den sphärischen Scankoordinatenwerten die Scaneinheit betreibbar ist. Das bedeutet in diesem Zusammenhang dass die sphärischen Scankoordinatenwerte in einer Zuordnungsvorschrift, beispielsweise einer Tabelle, gespeichert werden, die dann auf einer Speichereinheit einer Steuereinheit des Scan-Mikroskops hinterlegt wird und von der Steuereinheit während des Betriebs des konfokalen Scan-Mikroskops ausgelesen wird. Ein Ansteuersignal wird derart moduliert, dass Stellelemente der Scaneinheit Stellungen einnehmen, die den sphärischen Scankoordinatenwerten entsprechen. Alternativ dazu können die sphärischen Scankoordinatenwerte gleich derart formatiert werden, dass sie ohne Transformation schon als Ansteuersignal, beispielsweise in diesem moduliert, vorliegen, und diese Daten, beispielsweise digitalisiert, auf der Speichereinheit der Steuerreinheit abgelegt werden. Die Stellungen der Scaneinheit sind jeweils bezogen auf Winkel, die ein mit Hilfe der Scaneinheit abgelenkter Beleuchtungslichtstrahl mit einem mit Hilfe der Scaneinheit abgelenkten Referenzlichtstrahl in einer Referenzstellung der Scaneinheit einschließt.

Beim Ermitteln der sphärischen Scankoordinatenwerte werden unterschiedliche Zoomstufen des Scan-Mikroskops berücksichtigt. "Zoom" heißt ein Einschränken eines Bereichs bzw. eines Koordinatenbereichs. Die Zoomstufen entsprechen Vergrößerungsstufen und können auch als diese bezeichnet werden. In diesem Zusammenhang ist es vorgesehen, dass die unterschiedlichen Zoomstufen berücksichtigt werden, indem Abstände der Bildpunkte zueinander in Abhängigkeit der Zoomstufen vorgegeben werden. Das Berücksichtigen der Zoomstufen ermöglicht beim späteren Betreiben des Scan-Mikroskops unabhängig von der Zoomstufe immer die gleiche Präzision bei der Bilderstellung zu gewährleisten.

Gemäß einer Weiterbildung werden lediglich erste sphärische Scankoordinatenwerte mit Hilfe der Koordinatentransformation ermittelt und zweite sphärische Scankoordinatenwerte werden durch Interpolation der ersten Scankoordinatenwerte ermittelt. Dies ist insbesondere dann vorteilhaft, wenn nur eine begrenzte Rechenleistung vorliegt oder das Ermitteln der sphärischen Scankoordinatenwerte besonders schnell durchgeführt werden muss, beispielsweise während des Betriebs des Scan-Mikroskops.

Eine Weiterbildung sieht vor, dass die vorgegebenen Scankoordinatenwerte anhand der sphärischen Scankoordinatenwerte korrigiert werden. Dies ermöglicht ein bereits bestehendes Scan-Mikroskop, insbesondere dessen Scaneinheit, derart anzusteuern, dass das präzise Ermitteln der Bilder möglich ist. Dabei können die vorgegebenen Scankoordinatenwerte beispielsweise durch die sphärischen Scankoordinatenwerte ersetzt werden oder es können lediglich Differenzen der vorgegebenen Scankoordinatenwerte zu den sphärischen Scankoordinatenwerten ermittelt werden und die vorgegebenen Scankoordinatenwerte lediglich anhand der Differenzen, die in diesem Zusammenhang auch als Korrekturterme bezeichnet werden können, korrigiert werden.

Gemäß einem weiteren, nicht zu der vorliegenden Erfindung gehörenden Aspekt wird ein Beleuchtungslichtstrahl über eine Scaneinheit des Scan-Mikroskops auf eine Referenzprobe gerichtet. Die Scaneinheit wird abhängig von vorgegebenen Scankoordinatenwerten so angesteuert, dass der Beleuchtungslichtstrahl die Referenzprobe optisch abtastet. Von der Referenzprobe ausgehendes Detektionslicht wird in Abhängigkeit der vorgegebenen Scankoordinatenwerte erfasst. Die vorgegebenen Scankoordinatenwerte werden Bildkoordinatenwerten von Bildpunkten eines zu ermittelnden Bildes der Referenzprobe zugeordnet. Die Bildpunkte an den Bildkoordinatenwerten werden anhand des bei den entsprechenden vorgegebenen Scankoordinatenwerten erfassten Detektionslicht ermittelt. Das Bild der Referenzprobe wird anhand der ermittelten Bildpunkte erstellt. Das Bild der Referenzprobe wird mit der Referenzprobe verglichen und abhängig von dem Vergleich werden die vorgegebenen Scankoordinatenwerte korrigiert.

Das Erstellen des Bildes der Referenzprobe und die Korrektur der vorgegebenen Scankoordinatenwerte anhand des erstellten Bildes kann beispielsweise dazu beitragen, bei relativ unpräzise vorgegebenen Scankoordinatenwerten Korrekturterme zu ermitteln, durch die dann die relativ unpräzisen Scankoordinatenwerte durch ihnen gegenüber relativ präzise Scankoordinatenwerte ersetzt werden können. Ohne die Korrektur mit Hilfe der Referenzprobe ist es möglich, dass selbst bei präzise vorliegenden vorgegebenen Scankoordinatenwerten, wie beispielsweise den vorstehend genannten sphärischen Scankoordinatenwerten, Verzeichnungen des Bildes der Probe aufgrund optischer Effekte des Scan-Mikroskops auftreten. Diese Verzeichnungen können mit Hilfe der Referenzprobe berücksichtigt und eliminiert werden.

Als Referenzprobe eignet sich jede Probe, die eine wohldefinierte Struktur, beispielsweise ein engmaschiges Raster aufweist. Eine Referenzprobe mit einem sehr präzisen Referenzmuster kann beispielsweise durch Ätzen eines Halbleitersubstrats, wie aus der Mikrochipherstellung bekannt, erzeugt werden. Der Vergleich des Bildes der Referenzprobe mit der Referenzprobe kann beispielsweise durch Vergleichen des Bildes der Referenzprobe mit einem präzise erzeugten Referenzbild der Referenzprobe erfolgen. Der Vergleich kann insbesondere automatisch mit Hilfe eines Bildverarbeitungssystems auf einem Rechner durchgeführt werden. Die Korrektur der vorgegebenen Scankoordinatenwerte kann beispielsweise durch Ersetzen der vorgegebenen Scankoordinatenwerte mit den korrigierten Scankoordinatenwerten erfolgen oder es können lediglich die Differenzwerte zwischen den vorgegebenen Scankoordinatenwerte und den korrigierten Scankoordinatenwerten ermittelt werden und die so ermittelten Differenzen als Korrekturterme mit den vorgegebenen Scankoordinatenwerten verrechnet werden.

In einer Weiterbildung wird das Bild der Referenzprobe bei unterschiedlichen Zoomstufen des Scan-Mikroskops aufgenommen und die vorgegebenen Scankoordinatenwerte werden in Abhängigkeit der entsprechenden Zoomstufe korrigiert. In anderen Worten wird bei unterschiedlichen Vergrößerungen des Scan-Mikroskops das Verfahren zum Ermitteln von korrigierten Scankoordinatenwerten durchgeführt und die ermittelten korrigierten Scankoordinatenwerte bzw. die entsprechenden Korrekturterme werden zugeordnet zu den entsprechenden Zoom- oder Vergrößerungsstufen abgespeichert, wobei nachfolgend beim Betrieb des Scan-Mikroskops der aktuell eingestellten Zoomstufe entsprechend die Scankoordinatenwerte vorgegeben werden. Das Verfahren zum Ermitteln der korrigierten Scankoordinatenwerte kann vor dem bestimmungsgemäßen Betrieb des konfokalen Scan-Mikroskops durchgeführt werden oder auch nach Fertigstellung des Scan-Mikroskops, beispielsweise in Form einer regelmäßigen Kalibrierung.

Gemäß einem zweiten weiteren, nicht zu der vorliegenden Erfindung gehörenden Aspekt wird der Beleuchtungslichtstrahl über die Scaneinheit des Scan-Mikroskops auf eine Probe gerichtet. Die Scaneinheit wird abhängig von vorgegebenen Scankoordinatenwerten so angesteuert, dass der Beleuchtungslichtstrahl die Probe optisch abtastet. Es werden Scankoordinatenwerte der Scaneinheit ermittelt, die repräsentativ für tatsächliche Stellungen der Scaneinheit sind. Die ermittelten Scankoordinatenwerte werden korrigiert. Von der Probe ausgehendes Detektionslicht wird in Abhängigkeit der korrigierten Scankoordinatenwerte erfasst. Die korrigierten Scankoordinatenwerte werden Bildkoordinatenwerten zum Ermitteln der Bildpunkte eines Bildes der Probe zugeordnet. Die Bildpunkte an den Bildkoordinaten werden anhand des bei den entsprechenden korrigierten Scankoordinatenwerten erfassten Detektionslichts ermittelt. Das Bild der Probe wird anhand der ermittelten Bildpunkte erstellt.

Ein dritter weiterer, nicht zu der vorliegenden Erfindung gehörender Aspekt zeichnet sich durch ein Verfahren aus, das weitgehend dem Verfahren gemäß dem zweiten weiteren Aspekt entspricht, wobei im Unterschied dazu das von der Probe ausgehende Detektionslicht zunächst in Abhängigkeit der ermittelten Scankoordinatenwerte erfasst wird und nachfolgend die ermittelten Scankoordinatenwerte korrigiert werden, wodurch die Zuordnung des detektierten Detektionslichts zu den Scankoordinatenwerten verändert wird.

Die vorgegebenen und/oder sphärischen und/oder korrigierten Scankoordinatenwerte gemäß dem ersten oder zweiten Aspekt können grundsätzlich zum Ansteuern der Scaneinheit verwendet werden. Die Korrektur der ermittelten Scankoordinatenwerte gemäß den Aspekten drei und vier bezieht sich im Unterschied dazu auf Scankoordinatenwerte, die während des Betriebs des Scan-Mikroskops erfasst werden. Falls die Scaneinheit, und insbesondere die Stellelemente der Scaneinheit mit einer Regelung betrieben werden, so können die vorgegebenen Scankoordinatenwerte auch als Soll-Scankoordinatenwerte und die ermittelten Scankoordinatenwerte auch als Ist-Scankoordinatenwerte bezeichnet werden. In anderen Worten kann beispielsweise gemäß dem ersten und dem zweiten Aspekt eine Korrektur der Soll-Scankoordinatenwerte erfolgen, und gemäß dem dritten oder vierten Aspekt kann eine Korrektur von Ist-Scankoordinatenwerten erfolgen. In diesem Zusammenhang können beispielsweise die vorgegebenen Scankoordinatenwerte die vorstehend genannten sphärischen Scankoordinatenwerte oder die korrigierten Scankoordinatenwerte sein und/oder die ermittelten Scankoordinatenwerte können die unkorrigierten Scankoordinatenwerte sein.

Ausführungsbeispiele der Erfindung sind nachfolgend anhand von schematischen Zeichnungen näher erläutert.

Es zeigen:
- Figur 1: ein konfokales Scan-Mikroskop,
- Figur 2: eine Darstellung einer Koordinatentransformation,
- Figur 3: Formeln zum Durchführen der Koordinatentransformation,
- Figur 4: eine Referenzprobe und ein Bild der Referenzprobe,
- Figur 5: eine Zuordnungsvorschrift,
- Figur 6: ein Verfahren zum Ermitteln von korrigierten Scankoordinatenwerten,
- Figur 7: ein Ablaufdiagramm eines ersten Verfahrens zum Betreiben des konfokalen Scan-Milcroskops,
- Figur 8: ein Ablaufdiagramm eines zweiten Verfahrens zum Betreiben des Scan-Milcroskops.

Elemente gleicher Konstruktion oder Funktion sind figurenübergreifend mit den gleichen Bezugszeichen gekennzeichnet.

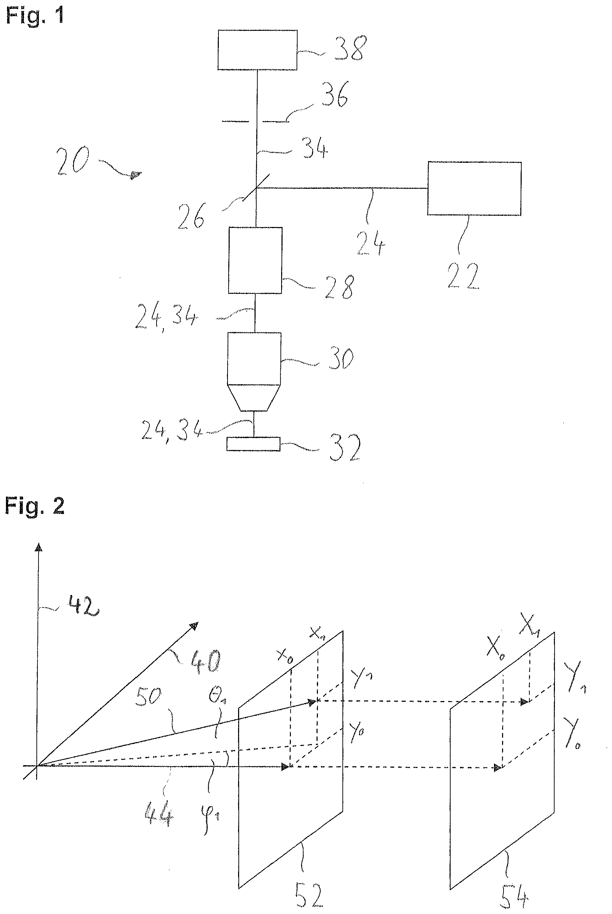

Figur 1 zeigt ein konfokales Scan-Mikroskop 20. Das Scan-Mikroskop 20 weist eine Laserlichtquelle 22 auf, die einen Beleuchtungslichtstrahl 24 erzeugt. Der Beleuchtungslichtstrahl 24 kann Licht einer einzelnen Wellenlänge oder mehrerer Wellenlängen, beispielsweise breitbandiges Laserlicht, insbesondere Weißlicht, umfassen. Alternativ oder zusätzlich kann das Scann-Mikroskop 20 weitere Laserlichtquellen umfassen, die beispielsweise Laserlicht unterschiedlicher Wellenlängen oder Wellenlängenbereiche erzeugen. Der Beleuchtungslichtstrahl 24 ist auf einen Hauptstrahlteiler 26 gerichtet, der beispielsweise durch einen dichroitischen Spiegel gebildet ist und der den Beleuchtungslichtstrahl 24 hin zu einer Scaneinheit 28 ablenkt. Die Scaneinheit 28 umfasst vorzugsweise einen oder mehrere Spiegel, die mit zwei oder mehr Stellelementen gekoppelt sind. Die Stellelemente sind mit Hilfe einer nicht dargestellten Steuereinheit des Scan-Mikroskops 20 ansteuerbar und mit dem bzw. den Spiegeln so gekoppelt, dass beim Ansteuern der Stellelemente die Spiegel den Beleuchtungslichtstrahl 24 in unterschiedliche Richtungen ablenken. Die Scaneinheit 28 lenkt den Beleuchtungslichtstrahl 24 hin zu einem Objektiv 30, das den Beleuchtungslichtstrahl 24 auf eine Probe fokussiert, die beispielsweise eine Referenzprobe 32 sein kann.

Die Probe ist beispielsweise eine Gewebeprobe, die fluoreszierende Stoffe aufweist, die beispielsweise in die Probe eingebracht wurden, und/oder die Stoffe aufweist, die mit Hilfe des Beleuchtungslichtstrahls 24 aktivierbar und in aktivem Zustand zum Fluoreszieren anregbar sind.

Als Referenzprobe 32 eignet sich jegliche Probe mit einer wohl definierten Struktur, beispielsweise eine Probe, die ein engmaschiges Raster aufweist. Eine derartige Referenzprobe 32 kann beispielsweise wie bei der Herstellung eines Mikrochips aus einem Halbleitersubstrat geätzt werden. Dies kann dazu beitragen, die Strukturen der Referenzprobe sogar im Subnanometerbereich äußerst präzise herzustellen.

Das von der Probe ausgehende Detektionslicht umfasst dementsprechend beispielsweise Fluoreszenzlicht oder reflektiertes Licht, das in Form eines Detektionslichtstrahls 34 das Objektiv 30 hin zu der Scaneinheit 28 durchläuft, welche den Detektionslichtstrahl 34 auf den Hauptstrahlteiler 26 lenkt, der das Detektionslicht hin zu einem Detektionspinhole 36, beispielsweise einer Lochblende, hin zu einem Detektor 38 durchlässt.

Die Scaneinheit 28 wird mit auf einem Speichermedium der Steuereinheit abgelegten Scankoordinatenwerten betrieben und das erfasste Detektionslicht wird in Abhängigkeit der Scankoordinatenwerte erfasst. In anderen Worten wird mit Hilfe der Steuereinheit das erfasste Detektionslicht den aktuell eingestellten Stellungen der Scaneinheit 28 zugeordnet, die durch den Scankoordinatenwerte repräsentiert sind. Dabei können diese Scankoordinatenwerte die Scankoordinatenwerte sein, mit denen die Scaneinheit 28 angesteuert wird, oder es können alternativ dazu Sensoren vorgesehen sein, die die tatsächlichen Stellungen der Stelleinheiten der Scaneinheit 28 erfasst, wobei dann nachfolgend die derartig erfassten Scankoordinatenwerte dem entsprechend erfassten Detektionslicht zugeordnet werden können. Falls die Stellelemente der Scaneinheit 28 mit Hilfe einer Regelung betrieben werden, so können die Scankoordinatenwerte, mit denen die Scaneinheit 28 angesteuert wird, auch als Soll-Scankoordinatenwerte bezeichnet werden und die erfassten Scankoordinatenwerte können als Ist-Scanlcoordinatenwerte bezeichnet werden.

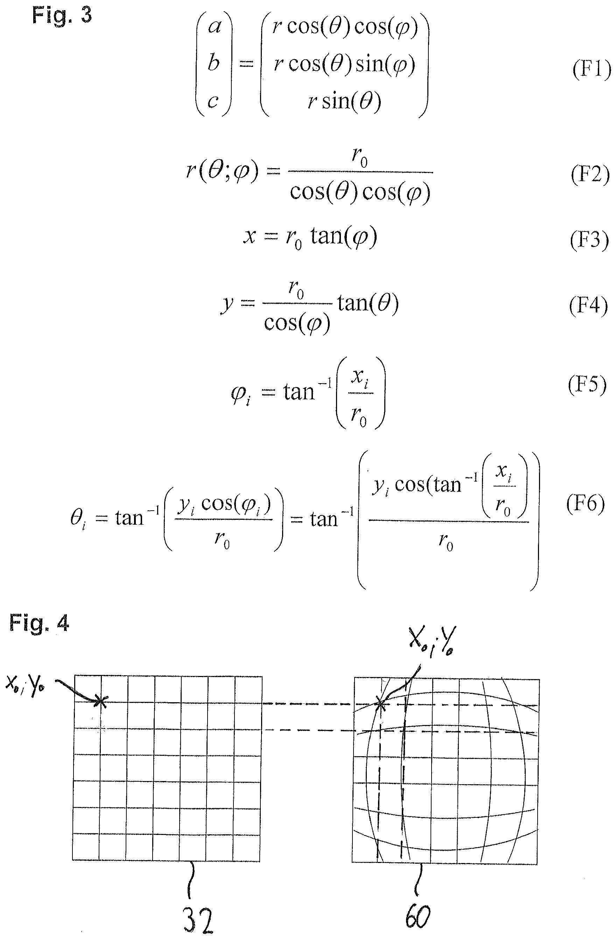

Figur 2 veranschaulicht eine Koordinatentransformation, mit deren Hilfe eine Zuordnung von kartesischen Bildkoordinatenwerten Xₙ, Yₙ von Bildpunkten eines zu erstellenden Bildes zu sphärischen Scankoordinatenwerten ϕₙ und θₙ, die Stellungen der Stellelemente der Scaneinheit 28 repräsentieren, erfolgt. Die Koordinatentransformation kann beispielsweise mit den in Figur 3 gezeigten Formeln F1 bis F6 durchgeführt werden. Insbesondere wird in Figur 2 veranschaulicht und mit den Formeln gemäß Figur 3 eine Transformation von kartesischen Koordinaten zu sphärischen Koordinaten durchgeführt. Das kartesische Koordinatensystem weist eine X-Achse 40, eine Y-Achse 42 und eine Z-Achse 44 auf, die jeweils senkrecht aufeinander stehen. Alternativ dazu kann es ausreichend sein, wenn lediglich eine zweidimensionale kartesische Fläche vorliegt, die beispielsweise durch die X-Achse 40 und die Y-Achse 42 definiert ist. Punkte in einer Zwischenbildebene 52 und einer Probenebene 54, insbesondere Bildkoordinatenwerte Xₙ, Yₙ können in dem kartesischen Koordinatensystem dargestellt werden. Das kartesische Koordinatensystem ist so gelegt, dass die Z-Achse 44 repräsentativ für eine Richtung und Lage ist, die einer Referenzrichtung und -lage entspricht. Ein Lichtstrahl, der in der Referenzrichtung abgelenkt wird und auf der Z-Achse 44 liegt, wird als Referenzlichtstrahl bezeichnet. Die Scaneinheit 28 lenkt in einer Referenzstellung den Referenzlichtstrahl entlang der Referenzrichtung ab. Falls der Beleuchtungslichtstrahl 24 dem Referenzlichtstrahl entspricht, so trifft er in der Probenebene auf einen Punkt x₀, y₀, der in der Zwischenbildebene 52 dem Bildpunkt mit den Bildkoordinatenwerten X₀, Y₀ entspricht.

Ein Transformationspfeil 50 ist repräsentativ für einen bezüglich des Referenzlichtstrahls abgelenkten Beleuchtungslichtstrahl 24. Der Transformationspfeil 50 weist einen Winkel ϕ₁ zu der Z-Achse 40 und einen Winkel θ₁ zu der Ebene auf, die durch die X-Achse 40 und die Z-Achse 44 aufgespannt ist. Der Beleuchtungslichtstrahl 24 trifft derart abgelenkt in der Zwischenbildebene 52 auf einen Punkt x₁, y₁, der in der Probenebene 54 einem Punkt auf der Probe mit den Koordinatenwerten X₁, Y₁ entspricht. Die Winkel ϕₙ und θₙ können auch als Scankoordinatenwerte bezeichnet werden.

Formel F1 repräsentiert grundsätzlich die Transformation von kartesischen Bildkoordinaten in ein Kugelkoordinatensystem. Formel F2 repräsentiert die Transformation mit Hilfe des Transformationspfeils 50. Der Transformationspfeil bezieht sich auf das "r(θ;ϕ)" in Formel F2. Dabei ist rₒ der Abstand zwischen dem Punkt, um den der Strahl abgelenkt wird, und der Zwischenbildebene 52, wobei Bezug auf Figur 2 genommen wird. Daraus ergibt sich für die kartesische X-Koordinate die in Formel F3 dargestellte Abhängigkeit und für die kartesische Y-Koordinate die in Formel 4 dargestellte Abhängigkeit. Stellt man diese Formeln um, so erhält man für den ersten sphärische Scankoordinatenwert ϕᵢ die in Formel 5 gezeigte Beziehung und für den zweiten sphärischen Scankoordinatenwert θᵢ die in Formel F6 gezeigte Beziehung.

Figur 4 zeigt die Oberfläche der Referenzprobe 32 und ein Bild 60 der Referenzprobe 32. Zum Aufnehmen des Bildes 60 der Referenzprobe 32 können die vorstehend ermittelten sphärischen Scankoordinatenwerte ϕₙ, θₙ als Ansteuerwerte für die Scaneinheit 28 verwendet werden. Jedoch können selbst bei Verwendung derart präziser sphärischer Scankoordinatenwerte ϕₙ, θₙ Verzeichnungen an den Bildrändern des Bildes 60 der Referenzprobe 32 entstehen, die in Figur 4 zur besseren Darstellung übertrieben dargestellt sind. Diese Verzeichnungen können beispielsweise aufgrund optischer Effekte der optischen Elemente des Scan-Mikroskops 20 entstehen. Alternativ dazu können zum Betreiben des Scan-Mikroskops 20 auch relativ unpräzise Scankoordinatenwerte verwendet werden, beispielsweise Scankoordinatenwerte, die mit Hilfe von mathematischen Näherungen ermittelt wurden. Die Verzeichnungen entstehen dann zum einen aufgrund der vorstehend genannten optischen Effekte und aufgrund der Näherungen beim Ermitteln der Scankoordinatenwerte.

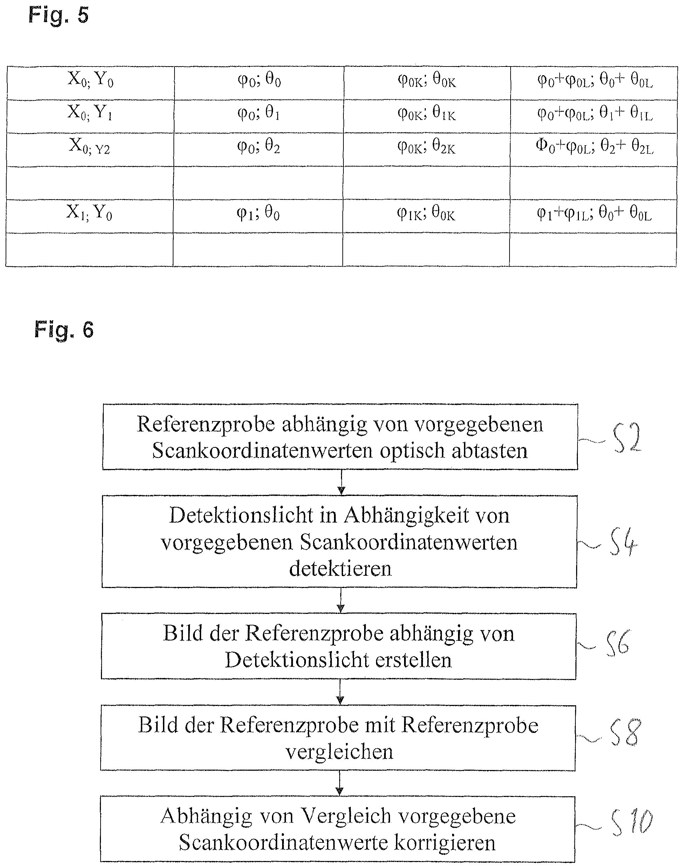

Figur 5 zeigt eine Zuordnungsvorschrift, die in Form einer Tabelle dargestellt ist. Die Zuordnungsvorschrift kann beispielsweise auf einem Speichermedium der Scaneinheit 28 abgelegt sein und/oder mit Hilfe der vorstehend erläuterten Koordinatentransformation und/oder dem Aufnehmen des Bildes 60 der Referenzprobe 32 erzeugt werden. Für den bestimmungsgemäßen Betrieb des Scan-Mikroskops 20 ist es grundsätzlich ausreichend, wenn lediglich zwei der Spalten der dargestellten Tabelle auf der Steuereinheit hinterlegt werden. Beispielsweise können die erste und die zweite, die erste und die dritte, oder die erste und die vierte Spalte hinterlegt werden. Somit erfolgt jeweils eine Zuordnung von kartesischen Bildkoordinatenwerten Xₙ, Yₙ zu sphärischen Scankoordinatenwerten ϕₙ, θₙ bzw. korrigierten Scankoordinatenwerten ϕ_{nK}, θ_{nK} oder den sphärischen Scankoordinatenwerten ϕₙ, θₙ, die mit Hilfe von Korrekturtermen ϕ_{nL}, θ_{nL} korrigiert werden.

Die sphärischen Scankoordinatenwerte ϕₙ, θₙ werden vorzugsweise mit Hilfe der in Figur 2 und Figur 3 erläuterten Koordinatentransformation gewonnen. Alternativ oder zusätzlich können die korrigierten Scankoordinatenwerte ϕ_{nK}, θ_{nK} mit Hilfe der Aufnahme des Bildes 60 der Referenzprobe 32 allein oder mit Hilfe der Koordinatentransformation und der Aufnahme des Bildes 60 der Referenzprobe 32 ermittelt werden. Gleiches gilt für die vierte Spalte der Tabelle, in der die sphärischen Scankoordinatenwerte ϕₙ, θₙ mit Hilfe der Korrekturterme ϕ_{nL}, θ_{nL} korrigiert werden, wobei die Korrekturterme durch einen Vergleich der sphärischen Scankoordinatenwerte ϕₙ, θₙ und der korrigierten Scankoordinatenwerte ϕ_{nK}, θ_{nK} erfolgt.

Figur 6 zeigt ein Ablaufdiagramm eines Programms zum Ermitteln der korrigierten Scankoordinatenwerte ϕ_{nK}, θ_{nK} mit Hilfe der Referenzprobe 32.

In einem Schritt S2 wird die Referenzprobe 32 abhängig von vorgegebenen Scankoordinatenwerten optisch abgetastet. Die vorgegebenen Scankoordinatenwerte können die sphärischen Scankoordinatenwerte ϕₙ, θₙ sein, oder Scankoordinatenwerte, die relativ dazu unpräzise sind.

In einem Schritt S4 wird das von der Referenzprobe 32 reflektierte Detektionslicht in Abhängigkeit von den vorgegebenen Scankoordinatenwerten detektiert. In anderen Worten wird unter anderem erfasst, wie die Scaneinheit 28 angesteuert wird zum Zeitpunkt des Erfassens eines bestimmten Anteils des Detektionslichts.

In einem Schritt S6 wird das Bild 60 der Referenzprobe 32 abhängig von dem Detektionslicht erstellt. Insbesondere wird das Bild der Referenzprobe 32 aus einzelnen Bildpunkten zusammengesetzt und die Bildpunkte werden anhand des detektierten Detektionslichts ermittelt. Dabei können den kartesischen Bildkoordinatenwerten Xₙ, Yₙ der Bildpunkte mit Hilfe der in Figur 5 gezeigten Zuordnungsvorschrift die entsprechenden vorgegebenen Scankoordinatenwerte, insbesondere die sphärischen Scankoordinatenwerte ϕₙ, θₙ oder die mit Hilfe der sphärischen Scankoordinatenwerte ϕₙ, θₙ korrigierten Scankoordinatenwerte ϕ_{nK}, θ_{nK} zugeordnet werden. Somit ist bekannt, aus welchem Bereich der Referenzprobe 32 das Detektionslicht stammt wodurch ein bestimmter Bildpunkt ermittelt werden kann.

In einem Schritt S8 wird das Bild 60 der Referenzprobe 32 mit der Referenzprobe 32 verglichen. Beispielsweise kann ein Referenzbild der Referenzprobe 32 erstellt werden und das Bild 60 der Referenzprobe 32 kann mit dem Referenzbild verglichen werden, beispielsweise mit Hilfe eines Bildverarbeitungsprogramms, das auf einem Computer gespeichert ist. Der Vergleich beinhaltet das Erkennen von Abweichungen, insbesondere Verzeichnungen zwischen dem Bild 60 der Referenzprobe 32 und dem Referenzbild. Beispielsweise können Schnittpunkte des Bildes 60 mit Schnittpunkten des Referenzbildes verglichen werden und deren Abstand, sowie deren Verschiebungsrichtung ermittelt werden und zur Korrektur verwendet werden.

In einem Schritt S10 werden abhängig von dem Vergleich die vorgegebenen Scankoordinatenwerte korrigiert. Insbesondere wird bei dieser Korrektur die Verschiebung der Referenzpunkte derart berücksichtigt, dass bei einem nachfolgenden Ansteuern der Scaneinheit 28 die Schnittpunkte des Bildes 60 den Referenzpunkten in der Referenzprobe 32 entsprechen. Die korrigierten Scankoordinatenwerte ϕ_{nK}, θ_{nK} können zusätzlich zu den sphärischen Scankoordinatenwerten ϕₙ, θₙ oder den vorgegebenen Scankoordinatenwerten in der Zuordnungsvorschrift abgespeichert werden. Alternativ dazu können die vorgegebenen Scankoordinatenwerte durch die korrigierten ϕ_{nK}, θ_{nK} ersetzt werden. Alternativ dazu können lediglich die Differenzterme zwischen den vorgegebenen Scankoordinatenwerte und den korrigierten Scankoordinatenwerte ϕ_{nK}, θ_{nK} ermittelt und mit den vorgegebenen Scankoordinatenwerten verrechnet abgespeichert werden.

Beim Untersuchen von weiteren Proben, beispielsweise Gewebeproben, kann nun die Scaneinheit 28, wie in Zusammenhang mit Figur 1 beschrieben, anhand der korrigierten Scankoordinatenwerte ϕ_{nK}, θ_{nK} oder den vorgegebenen Scankoordinatenwerten mit den Korrekturwerten ϕ_{nL}, θ_{nL} angesteuert werden. Falls die Stellungen der Stellelemente der Scaneinheit 28 geregelt werden, so sind die korrigierten Scankoordinatenwerte ϕ_{nK}, θ_{nK} bzw. die vorgegebenen Scankoordinatenwerte mit den Korrekturtermen ϕ_{nL}, θ_{nL} die Soll-Scankoordinatenwerte, die Sollstellungen der Stellelemente der Scaneinheit 28 vorgeben.

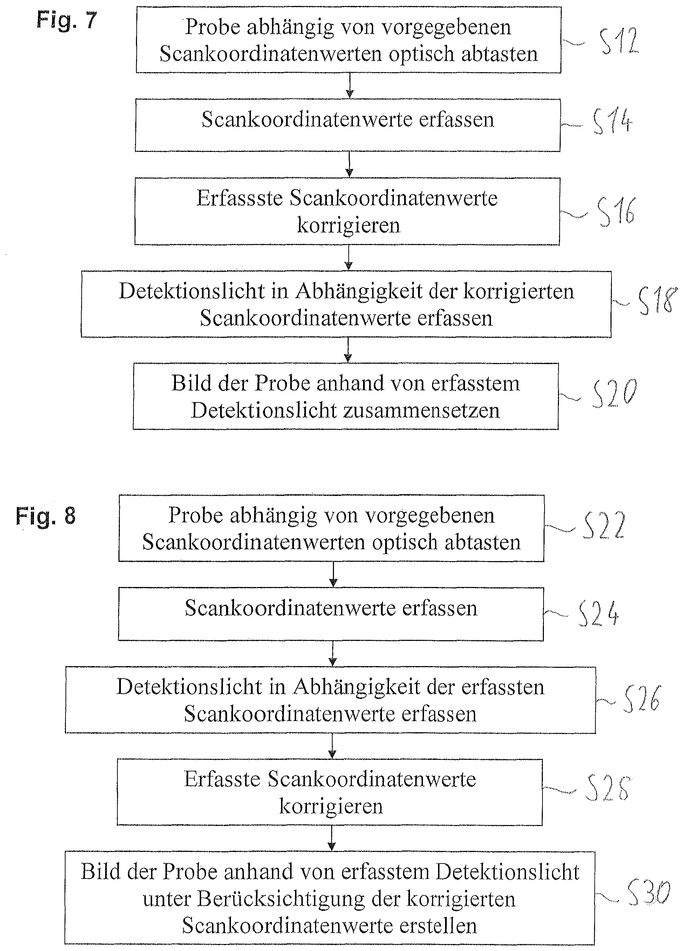

Figur 7 zeigt ein Ablaufdiagramm eines Verfahrens zum Betreiben des konfokalen Scan-Mikroskops 20. Das Verfahren eignet sich dazu, ein Bild einer Gewebeprobe aufzunehmen. In einem Schritt S 12 wird die Probe abhängig von den vorgegebenen Scankoordinatenwerten optisch abgetastet. Die vorgegebenen Scankoordinatenwerte können die durch Näherung ermittelten Scankoordinatenwerte, die sphärischen Scankoordinatenwerte ϕₙ, θₙ oder die durch Näherung bestimmten Scankoordinatenwerte, die mit Hilfe der sphärischen Scankoordinatenwerte ϕₙ, θₙ korrigiert werden, also die korrigierten Scankoordinatenwerte ϕ_{nK}, θ_{nK} sein.

In einem Schritt S 14 werden Scankoordinatenwerte erfasst, die den tatsächlichen Stellungen der Stellelemente der Scaneinheit 28 entsprechen. Dazu sind vorzugsweise Sensoren vorgesehen, die die Stellungen der Stellelemente erfassen. Falls die Scaneinheit 28 mit Hilfe der Regelung betrieben wird, können die erfassten Scankoordinatenwerte auch als Ist-Scankoordinatenwerte bezeichnet werden.

In einem Schritt S16 werden die erfassten Scankoordinatenwerte korrigiert. Vorzugsweise werden die erfassten Scankoordinatenwerte, falls diese die durch Näherung bestimmten Scankoordinatenwerte sind, mit Hilfe der sphärischen Scankoordinatenwerte ϕₙ, θₙ und/oder mit Hilfe der durch das Verfahren in Figur 6 gezeigten Korrektur korrigiert.

In einem Schritt S18 wird das Detektionslicht in Abhängigkeit der korrigierten Scankoordinatenwerte erfasst.

In einem Schritt S20 wird das Bild der Probe anhand des erfassten Detektionslichts zusammengesetzt, entsprechend dem Erstellen des Bildes der Referenzprobe 32 in Schritt S6 des in Figur 6 gezeigten Verfahrens.

Figur 8 zeigt ein zu dem in Figur 7 gezeigten Verfahren zum Betreiben des Scan-Mikroskops 20 alternatives Verfahren zum Betreiben des konfokales Scan-Mikroskops 20. Die Schritte S22 bis S30 des zweiten Programms zum Betreiben des Scan-Mikroskops 20 entsprechen den Schritten S 12 bis S20 des ersten Verfahrens zum Betreiben des Scan-Mikroskops, wobei die Schritte S26 und S28 bezüglich der Schritte S 16 und S 18 in der Reihenfolge vertauscht sind. Insbesondere wird zunächst der Schritt S26 durchgeführt, in dem das Detektionslicht in Abhängigkeit der erfassten Scankoordinatenwerte erfasst wird, insbesondere in Abhängigkeit der noch nicht korrigierten erfassten Scankoordinatenwerte bzw. der noch nicht korrigierten Ist-Scankoordinatenwerte. Im Schritt S28 werden dann nachfolgend die erfassten Scankoordinatenwerte bzw. Ist-Scankoordinatenwerte korrigiert.

In anderen Worten erfolgt bei dem in Figur 7 gezeigten Verfahren die Korrektur der Istwerte während der Aufnahme des Bildes, und während des Erfassens des Detektionslichts, wobei im Gegensatz dazu das in Figur 8 gezeigte Verfahren auch nachträglich nach Beendigung der Detektion des Detektionslichts durchgeführt werden kann. Somit kann beispielsweise bei einem bestehenden und bekannten Scan-Mikroskop, das relativ unpräzise Bilder von den Proben erzeugt, nachträglich mit Hilfe des in Figur 8 gezeigten Verfahrens noch ein präzises Bild ohne Verzeichnungen erstellt werden.

Das in Figur 1 gezeigte konfokale Scan-Mikroskop 20 ist lediglich schematisch dargestellt. Insbesondere weist ein derartiges Mikroskop, wie es vielfach aus entsprechender Fachliteratur bekannt ist, deutlich mehr Spiegel, Blenden und optische Elemente wie Fokussierlinsen und Parallelisierungslinsen auf. Ferner können auch andere Mikroskopieverfahren außer der Fluoreszenzmikroskopie mit dem konfokalen Scan-Mikroskop durchgeführt werden. Das Verfahren der vorliegenden Erfindung ist für alle Rastermethoden anwendbar.

### Bezugszeichenliste:

- 20: Scan-Mikroskop
- 22: Laserlichtquelle
- 24: Beleuchtungslichtstrahl
- 26: Hauptstrahlteiler
- 28: Scaneinheit
- 30: Objektiv
- 32: Referenzprobe
- 34: Detektionslichtstrahl
- 36: Detektionspinhole
- 38: Detektor
- 40: X-Achse
- 42: Y-Achse
- 44: Z-Achse
- 50: Transformationspfeil
- 52: Zwischenbildebene
- 54: Probenebene
- 60: Bild der Referenzprobe

- xₙ, yₙ: Probenkoordinatenwerte
- Xₙ, Yₙ: kartesische Bildkoordinatenwerte
- ϕₙ, θₙ: Scankoordinatenwerte
- ϕ_{nK}, θ_{nK}: korrigierte Scankoordinatenwerte
- ϕ_{nL}, θ_{nL}: Korrekturterm
- F1 - F6: Formeln eins bis sechs
- S2 - S20: Schritte zwei bis zwanzig

## Patentansprüche

1. Verfahren zum Ermitteln von Scankoordinatenwerten (φn, θn) zum Betreiben einer Scaneinheit (28) eines konfokalen Scanmikroskops (20),
bei dem abhängig von kartesischen Bildkoordinatenwerten (Xn, Yn) von Bildpunkten eines zu erstellenden Bildes (60) einer Probe (32) mit Hilfe einer Koordinatentransformation der kartesischen Bildkoordinatenwerte (Xn, Yn) in ein Kugelkoordinatensystem sphärische Scankoordinatenwerte (φn, θn) ermittelt werden, die sphärischen Scankoordinatenwerte (φn, θn) in einer Zuordnungsvorschrift gespeichert werden, die dann auf einer Speichereinheit einer Steuereinheit des konfokalen Scanmikroskops (20) hinterlegt wird und von der Steuereinheit während des Betriebs des konfokalen Scanmikroskops (20) ausgelesen wird, die Scaneinheit (28) abhängig von den in der Zuordnungsvorschrift gespeicherten sphärischen Scankoordinatenwerten (φn, θn) betrieben wird, um einen Beleuchtungslichtstrahl (24) in unterschiedliche Richtungen abzulenken,
wobei eine präzise Zuordnung der Bildpunkte des Bildes (60), die durch Detektieren von Detektionslicht ermittelt werden, zu Stellungen der Scaneinheit (28) des konfokalen Scan-Mikroskops (20) erfolgt, wobei die Stellungen der Scaneinheit (28) durch die sphärischen Scankoordinatenwerte (ϕn, θn) vorgegeben sind,
und wobei bei dem beim Ermitteln der sphärischen Scankoordinatenwerte (φn, θn) unterschiedliche mögliche Zoomstufen des Scanmikroskops (20) berücksichtigt werden, indem Abstände der Bildpunkte zueinander in Abhängigkeit der Zoomstufen vorgegeben werden.

2. Verfahren nach Anspruch 1,
bei dem erste sphärische Scankoordinatenwerte (φn, θn) mit Hilfe der Koordinatentransformation ermittelt werden und zweite sphärische Scankoordinatenwerte (φn, θn) durch Interpolation der ersten sphärischen Scankoordinatenwerte (φn, θn) ermittelt werden.

3. Verfahren nach einem der vorstehenden Ansprüche,
bei dem vorgegebene Scankoordinatenwerte anhand der sphärischen Scankoordinatenwerte (φn, θn) korrigiert werden.

## Claims

1. Method for ascertaining scan coordinate values (ϕₙ, θₙ) for operating a scanning unit (28) of a confocal scanning microscope (20),
wherein, depending on Cartesian image coordinate values (Xₙ, Yₙ) of pixels of an image (60), to be created, of a sample (32), spherical scan coordinate values (ϕₙ, θₙ) are ascertained with the aid of a coordinate transformation of the Cartesian image coordinate values (Xₙ, Yₙ) into a spherical coordinate system, the spherical scan coordinate values (ϕₙ, θₙ) are stored in an assignment specification, which is then stored in a memory unit of a control unit of the confocal scanning microscope (20) and read by said control unit during the operation of the confocal scanning microscope (20), the scanning unit (28) is operated dependent on the spherical scan coordinate values (ϕₙ, θₙ) stored in the assignment specification so as to deflect an illumination light beam (24) in different directions,
wherein there is a precise assignment of the pixels of the image (60), which are ascertained by detecting detection light, to positions of the scanning unit (28) of the confocal scanning microscope (20), wherein the positions of the scanning unit (28) are predetermined by the spherical scan coordinate values (ϕₙ, θₙ),
and wherein different possible zoom levels of the scanning microscope (20) are taken into account when ascertaining the spherical scan coordinate values (ϕₙ, θₙ) by virtue of distances between the pixels being predetermined depending on the zoom levels.

2. Method according to Claim 1,
wherein first spherical scan coordinate values (ϕₙ, θₙ) are ascertained with the aid of the coordinate transformation and second spherical scan coordinate values (ϕₙ, θₙ) are ascertained by interpolating the first spherical scan coordinate values (ϕₙ, θₙ).

3. Method according to either of the preceding claims,
wherein predetermined scan coordinate values are corrected on the basis of the spherical scan coordinate values (ϕₙ, θₙ).

## Revendications

1. Procédé destiné à déterminer des valeurs de coordonnées de balayage (ϕₙ, θₙ,) pour faire fonctionner une unité de balayage (28) d'un microscope confocal à balayage (20),
dans lequel, en fonction de valeurs cartésiennes de coordonnées d'images (Xₙ, Yₙ) de pixels d'une image (60) à créer d'un échantillon (32), à l'aide d'une transformation des coordonnées des valeurs cartésiennes de coordonnées d'images (Xₙ, Yₙ) en un système de coordonnées sphériques, on détermine des valeurs de coordonnées de balayage (ϕₙ, θₙ,) sphériques, les valeurs de coordonnées de balayage (ϕₙ, θₙ,) sphériques sont stockées dans une règle d'affectation qui est ensuite consignée sur une unité de mémoire d'une unité de commande du microscope confocal à balayage (20) et qui est lue par l'unité de commande pendant le fonctionnement du microscope confocal à balayage (20), on fait fonctionner l'unité de balayage (28) en fonction des valeurs de coordonnées de balayage (ϕₙ, θₙ,) sphériques stockées dans la règle d'affectation, pour faire dévier un faisceau lumineux d'éclairage (24) dans différentes directions,
une affectation précise des pixels de l'image (60) qui sont déterminés par détection d'une lumière de détection étant effectuée à des positions de l'unité de balayage (28) du microscope confocal à balayage (20), les positions de l'unité de balayage (28) étant prédéfinies par les valeurs de coordonnées de balayage (ϕₙ, θₙ,) sphériques, et, lors de la détermination des valeurs de coordonnées de balayage (ϕₙ, θₙ,) sphériques, différents niveaux de zoom possibles du microscope à balayage (20) étant pris en compte en prédéfinissant des écarts mutuels entre des pixels en fonction des niveaux de zoom.

2. Procédé selon la revendication 1,
dans lequel on détermine des premières valeurs de coordonnées de balayage (ϕₙ, θₙ,) sphériques à l'aide de la transformation de coordonnées et des deuxièmes valeurs de coordonnées de balayage (ϕₙ, θₙ,) sphériques par interpolation des premières valeurs de coordonnées de balayage (ϕₙ, θₙ,) sphériques.

3. Procédé selon l'une quelconque des revendications précédentes,
dans lequel on corrige des valeurs de coordonnées prédéfinies à l'aide des valeurs de coordonnées de balayage (ϕₙ, θₙ,) sphériques.
